# EUROPÄISCHE PATENTSCHRIFT

(11) **EP 2 351 463 B1**
(45) Veröffentlichungstag und Bekanntmachung des Hinweises auf die Patenterteilung: **11.10.2017**
(21) Anmeldenummer: 09771650.0
(22) Anmeldetag: 27.10.2009
(51) Int. Cl.: H05B 37/02

(54) **VERFAHREN ZUR ANSTEUERUNG VON LEUCHTMITTELBETRIEBSGERÄTEN**
METHOD FOR CONTROLLING OF LIGHTING CONTROL DEVICES
PROCÉDÉ POUR COMMANDER DES APPAREILS DE COMMANDE DE LAMPE

(30) Priorität: 31.10.2008 AT 62808 U
(43) Veröffentlichungstag der Anmeldung: 03.08.2011
(73) Patentinhaber: Tridonic GmbH & Co KG, 6851 Dornbirn (AT)
(72) Erfinder: MAIER, Joachim, A-6840 Götzis (AT); MAIER, Simon, A-6800 Feldkirch (AT)
(74) Vertreter: Rupp, Christian
(86) Internationale Anmeldenummer: PCT/AT2009/000417
(87) Internationale Veröffentlichungsnummer: WO 2010/048652

(56) Entgegenhaltungen:
- EP-A2- 0 447 136
- EP-A2- 1 684 552
- WO-A1-01/52607
- WO-A1-98/39951
- DE-A1- 19 801 065
- DE-A1-102005 008 996
- DE-A1-102006 001 256
- US-A1- 2007 273 307

## Beschreibung

Die Erfindung betrifft ein Verfahren zur Ansteuerung von Leuchtmittelbetriebsgeräten gemäss dem Oberbegriff des Anspruchs 1. Darüber hinaus betrifft die vorliegende Erfindung ein Leuchtmittelbetriebsgerät und ein System, welche zur Durchführung des entsprechenden Verfahrens geeignet sind.

### Technisches Gebiet und Stand der Technik

Lichtsteuer- und Lichtmanagementsysteme haben sich als fester Bestandteil moderner Beleuchtungslösungen etabliert. Leuchtmittelbetriebsgeräte moderner Bauart wie elektronische Vorschaltgeräte für Gasentladungslampen oder Betriebsgeräte für Leuchtdioden verfügen üblicherweise über Schnittstellen, über die extern Steuerbefehle an das Leuchtmittelbetriebsgerät übermittelt werden können. So kann durch entsprechende Steuersignale beispielsweise eine gewünschte Leuchtintensität (Dimm-stufe) des Leuchtmittels eingestellt werden.

In der Beleuchtungsindustrie wurden verschiedene Standards für die Steuerung von Leuchtmittelbetriebsgeräten entwickelt, die sich hinsichtlich ihrer Komplexität unterscheiden. Technologisch am fortschrittlichsten sind digitale Lösungen, wo das Leuchtmittelbetriebsgerät eine digitale Schnittstelle aufweist, über die digitale Steuerbefehle von einer Kontrolleinheit zum Leuchtmittelbetriebsgerät gesendet werden können. Die Kommunikation kann dabei bidirektional erfolgen, d.h. das Leuchtmittelbetriebsgerät kann nicht nur Empfänger von Signalbefehlen sein, sondern auch als Sender von Signalen agieren. So kann beispielsweise das Leuchtmittelbetriebsgerät aktiv einen Statusbericht an die Kontrolleinheit rückmelden, wenn ein Fehler auftritt.

Für die Übermittlung der Signale sind aus dem Stand der Technik unterschiedlichste Wege bekannt: So ist drahtgebundene Übermittlung (beispielsweise durch Nutzung der Spannungsversorgungsleitung (Powerline) oder Verwendung eines von der Spannungsversorgungsleitung separaten Leitungspaares) und drahtungebundene Übermittlung (bspw. Funk, Infrarot) möglich.

Als Beispiel für die Steuerung von Leuchtmittelbetriebsgeräten sei auf die sogenannte DSI-Technologie (Digital Serial Interface) und den sogenannten DALI-Standard (digital adressable lighting interface) verwiesen. Im DALI-Standard wird ein umfangreicher digitaler Steuerbefehlssatz zur Kommunikation mit dem Leuchtmittelbetriebsgerät zur Verfügung gestellt. In einem DALI-konformen System sind neben dem Leuchtmittelbetriebsgerät mit digitaler Schnittstelle eine zugehörige Buseinrichtung einschließlich einer digitalen Kontrolleinheit notwendig.

In vielen Fällen wünscht der Anwender eine weniger aufwendige Technologie, die etwas günstiger ist, aber nichtsdestotrotz die wesentlichen Funktionalitäten zur Verfügung stellt. So sind aus dem Stand der Technik auch Leuchtmittelbetriebsgeräte bekannt, bei denen an der digitalen Schnittstelle (Steuereingang) wahlweise ein Digitalsignal oder ein mittels eines (vorzugsweise mit Netzspannung versorgten) Tasters erzeugtes Signal angelegt werden kann. Möchte der Anwender die digitale Peripherie nicht verwenden, so kann (optional) der Digitalsteuereingang des Leuchtmittelbetriebsgeräts mittels Tasterbetätigung angesteuert werden.

Dabei wird beispielsweise die Zeitdauer sowie die Wiederholrate der Tasterbetätigung als Signal zum Ein- und/oder Ausschalten oder zur Helligkeitsregelung (Dimmen) ausgewertet. Ein Beispiel für ein derartiges Leuchtmittelbetriebsgerät, an dessen digitalen Steuereingang ein mittels eines mit Netzspannung versorgten Tasters oder Schalters generiertes Signal anliegt, ist beispielsweise in DE 297 24 657 offenbart.

Eine Anwendung für die Steuerung des Leuchtmittelbetriebsgeräts mittels Tasterbetätigung ist bei anwesenheitsgesteuerten Lichtlösungen gegeben, wo das Leuchtmittelbetriebsgerät durch einen Bewegungsmelder gesteuert wird. Solche Leuchtmittelbetriebsgeräte, die an ein oder mehrere Bewegungsmelder angeschlossen sind, sind beispielsweise in Treppenhäusern, langen Korridoren, Tiefgaragen, Fußgängerunterführungen oder in U-Bahnhöfen im Einsatz. Wird durch einen Bewegungsmelder eine Bewegung beispielsweise aufgrund der Anwesenheit einer Person erfasst, so sorgt das Leuchtmittelbetriebsgerät dafür, dass der entsprechende Raumbereich durch das Leuchtmittel mit einer gewünschten Helligkeit (Betriebssollwert) ausgeleuchtet wird. Bei Fehlen einer Bewegung (Abwesenheit) wird das Leuchtmittel auf einen Ruhewert gedimmt. Aus dem Stand der Technik sind verschiedene Dimmszenarien bekannt, wie der Wechsel zwischen den Dimmstufen erfolgen kann. Anstatt abrupt zwischen den Dimmstufen zu schalten, kann das Leuchtmittelbetriebsgerät so eingestellt sein, dass der Wechsel zwischen den Dimmstufen während einer bestimmten Zeitdauer (fade-on bzw fade-off-Zeit) geschieht.

Die Festlegung eines Dimm-szenarios mit geeigneten Werten für die Dimm-stufen, fade-on und fade-off-Zeiten erweist sich in der Praxis als nicht einfach, da das Schaltverhalten des Leuchtmittelbetriebsgeräts stark von der jeweiligen spezifischen Anwendung abhängen kann. So ist in Krankenhausfluren beispielsweise durch Normen vorgeschrieben, dass eine gewisse Resthelligkeit auch nachts immer vorhanden sein muss, auch wenn über eine gewisse Zeitperiode hinweg keine Bewegung mehr detektiert wurde. Dem gegenüber kann in einem Treppenhaus einer privaten Wohnanlage nachts relativ rasch die Beleuchtung abgeschaltet werden, nachdem wieder 'Ruhe eingekehrt ist'. Die zeitliche Häufigkeit, mit der eine Bewegungserkennung auftritt, und die Zeitdauer zwischen zwei aufeinanderfolgenden Bewegungserkennungen kann stark variieren: Der Bewegungsmelder in einer Tiefgarage spricht in 'Stosszeiten' sehr häufig an, wenn die Tiefgarage stark frequentiert ist (beispielsweise morgens zu Arbeitbeginn und abends zu Arbeitsende), während in ruhigeren Zeiten beispielsweise in den tiefen Nachstunden relativ selten ein Bewegungssignal ausgelöst wird.

Leuchtmittelbetriebsgeräte des Stands der Technik verfügen nur über ein Dimm-szenario, die Festlegung des Dimm-szenarios mit den einzelnen Dimm-parametern erfolgt während der Fertigung des Leuchtmittelbetriebsgeräts oder bei der Installation kurz vor Inbetriebnahme, beispielsweise mittels Programmierung, und kann im Betrieb nicht verändert werden.

Bei Einstellung des Dimm-szenarios sollen nun vorrangig zwei Aspekte berücksichtigt werden: Zum einen, um möglichst viel an Energie zu sparen, sollen die Leuchtmittel möglichst kurze Zeit und nur wenn sie wirklich notwendig sind in Betrieb sein. Zum anderen sollen rasch aufeinanderfolgende Ein- und Ausschaltvorgänge mit kurzer Ein- und Ausschaltdauer vermieden werden, da sich dies lebenszeitverkürzend auf das Leuchtmittel auswirken kann.

Bei bestimmten Leuchtmitteln (beispielsweise Hochdruckgasentladungslampen) ist zudem oft ein rasch aufeinanderfolgendes Aus- und Wiedereinschalten gar nicht möglich, da die Lampe zuerst abkühlen muss, bevor sie wiedergezündet werden kann.

Aus der DE 10 2005 008 996 A1 ist es bekannt ein von einem Bewegungsmelder einem Betriebsgerät zugeführtes Steuersignal auszuwerten. Abhängig von dem Ausgangssignal wird dann das elektronisch gesteuerte Leuchtmittelbetriebsgerät auf einem von mehreren vorgegebenen Dimmpegel angesteuert. Aus der EP 1 684 552 A2 ist außerdem bekannt, über einen manuell betätigten Schalter oder Taster selektiv die Versorgungsspannung des Schalters oder Tasters einem Steuereingang des Betriebsgeräts zuzuführen. Abhängig von der Auswertung des zugeführten Signals wird in dem Betriebsgerät eine Funktionalität gespeichert, geändert oder gelöscht.

### Darstellung der Erfindung

Die Aufgabe der Erfindung ist, die Ansteuerung von Leuchtmittelbetriebsgeräten zu verbessern. Es soll im speziellen den Anforderungen Energieeffizienz und Schonung des Leuchtmittels Rechnung getragen werden.

Die genannte Aufgabe der Erfindung wird durch die Merkmale der unabhängigen Ansprüche gelöst. Die abhängigen Ansprüche bilden den zentralen Gedanken in besonders vorteilhafter Weise weiter.

Erfindungsgemäß wird ein Leuchtmittelbetriebsgerät vorgeschlagen.
Typische Beispiele für ein derartiges Leuchtmittelbetriebsgerät sind Betriebsgeräte für Gasentladungslampen (auch elektronische Vorschaltgeräte bzw. EVG genannt) oder Betriebsgeräte für organische oder anorganische Leuchtdioden.

In dem erfindungsgemäßen Leuchtmittelbetriebsgerät werden wenigstens zwei unterschiedliche Dimm-stufen festgelegt, wobei eine erste Dimm-stufe einem Ruhewert und eine zweite Dimm-stufe einem Betriebssollwert des Leuchtmittels entspricht. Weiters sind wenigstens zwei unterschiedliche Dimm-szenarien festgelegt, wobei die Dimm-szenarien durch wenigstens einen Dimm-parameter charakterisiert werden und sich die unterschiedlichen Dimm-szenarien durch die Werte der Dimm-parameter unterscheiden. Das Dimm-szenario beschreibt den Übergang zwischen Ruhewert und Betriebssollwert bzw. zwischen Betriebssollwert und Ruhewert.

Erfindungsgemäß wird eine der verschiedenen Dimm-stufen selektiv angesteuert abhängig von einem Steuersignal, welches dem Leuchtmittelbetriebsgerät zugeführt wird. Eine durch das Steuersignal hervorgerufene Änderung der Dimmstufe wird gemäß einem der Dimm-szenarien erfolgen. Auch der Wert der Dimm-stufen kann angepasst werden (das heißt der Ruhewert und / oder der Betriebssollwert). Vorzugsweise wird bei Erfassung einer Bewegung in einem definierten Raumgebiet das Leuchtmittelbetriebsgerät, ausgehend von einem Ruhewert als erster Dimm-stufe, auf einen vom Ruhewert verschiedenen Betriebssollwert als zweite Dimm-stufe angesteuert.

Das Steuersignal am Leuchtmittelbetriebsgerät von einem Bewegungsmelder erzeugt, der mit einem Steuereingang des Leuchtmittelbetriebsgeräts verbunden ist.

Erfindungsgemäß werden die Steuersignale statistisch ausgewertet und in Abhängigkeit davon eines der Dimmszenarien (d.h. der Wert der Dimm-parameter) ausgewählt. Erfindungsgemäß kann die Häufigkeit der Steuersignale und/oder die Dauer zwischen den Steuersignalen ausgewertet werden.

Vorzugsweise sind die Dimm-stufen (beispielsweise Ruhewert, Betriebssollwert) und die Dimm-parameter einstellbar.

Der Ruhewert kann auf einen Wert von mehr als 0 % Lichtleistung eingestellt werden.

Vorzugsweise wird ausgewertet, wie oft und in welchen Zeitabständen ein Steuersignal in einem bestimmten Zeitabschnitt am Leuchtmittelbetriebsgerät anliegt. In Abhängigkeit davon werden die Dimm-szenarien und/oder Dimm-stufen angepasst.

In einer vorteilhaften Variante wird die Zeitdauer für den Wechsel zwischen den Dimm-stufen verlängert, wenn sich Steuersignale während einer bestimmten Zeitperiode hinweg häufen. Falls in einer bestimmten Zeitperiode selten Steuersignale am Leuchtmittelbetriebsgerät anliegen, so kann die Zeitdauer für den Wechsel zwischen den Dimmstufen verkürzt werden.
Das Verfahren kann natürlich auch andersrum durchgeführt werden, d.h. bei Häufung von Signalen kann die Zeitdauer für den Wechsel zwischen den Dimm-stufen verkürzt und im andern Fall verlängert werden.

Das Dimm-szenario (die Dimm-parameter) können zusätzlich/alternativ an die Tageszeit angepasst werden.

In einer weiteren Ausführungsform kann eine Ermittlung der Tageszeit anhand der Erfassung der Steuersignale erfolgen.

Vorzugsweise ist die Auswertung der Steuersignale (Auswertung des Schaltverhaltens) softwaremäßig implementiert.

Abbildung 1 zeigt eine Anordnung von einem Leuchtmittelbetriebsgerät mit einem Bewegungsmelder.

Abbildung 2a und 2b zeigen den zeitlichen Verlauf des am Leuchtmittelbetriebsgerät anliegenden Signals und die Ansteuerung des Leuchtmittelbetriebsgeräts.

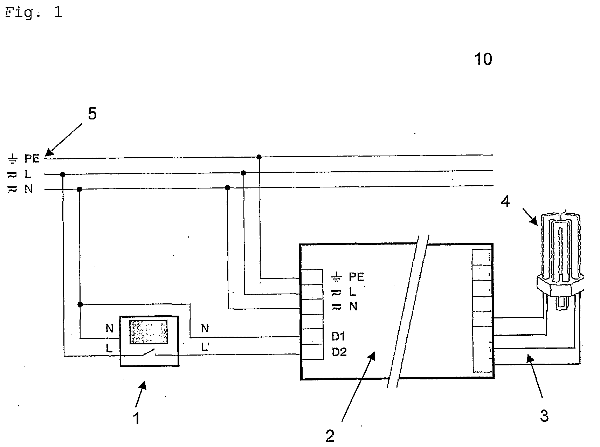

Abbildung 1 zeigt in schematischer Darstellung ein System 10 aufweisend einen bekannten Bewegungsmelder 1, ein elektronisches Leuchtmittelbetriebsgerät 2, sowie ein an einem Ausgang 3 angeschlossenen Leuchtmittel 4. Bei Leuchtmittel 4 kann es sich prinzipiell um jedes beliebige Leuchtmittel handeln, so beispielsweise um Gasentladungslampen oder um organische bzw. anorganische Leuchtdioden. Das dargestellte Leuchtmittelbetriebsgerät 2 verfügt über 3 Anschlüsse PE, L, N, die mit der Erde, dem Phasenleiter und dem Nullleiter kontaktierbar sind. Das Leuchtmittelbetriebsgerät 2 verfügt darüber hinaus über zumindest eine Schnittstelle mit den Anschlüssen D1 und D2 (bilden den Steuereingang D1, D2).

Die beiden Anschlüsse D1 und D2 (der Steuereingang D1, D2) können so ausgebildet sein, dass Signale durch die Versorgungsspannung wie beispielsweise mittels der Netzspannung (beispielsweise als geschaltete Netzspannung) oder auch Tastersignale übermittelt werden. In dem dargestellten Beispiel ist der Anschluss D1 mit dem Nullleiter N der Spannungsversorgung 5 verbunden.
Die beiden Anschlüsse D1 und D2 können so ausgelegt sein, dass über diese Anschlüsse dem Leuchtmittelbetriebsgerät 2 auch digitale Befehle bspw. gemäß dem DALI-Standard übermittelt werden können bzw. das Leuchtmittelbetriebsgerät 2 auch Signale abschicken kann.

Es kann aber auch möglich sein, dass das Leuchtmittelbetriebsgerät 2 über zwei weitere Anschlüsse D1' und D2' verfügt, wobei über diese Anschlüsse dem Leuchtmittelbetriebsgerät 2 auch digitale Befehle bspw. gemäß dem DALI-Standard übermittelt werden können bzw. das Leuchtmittelbetriebsgerät 2 auch Signale abschicken kann. In diesem Fall würden somit zwei parallel vorhandene Anschlussmöglichkeiten bestehen, eine für Tastersignale oder Signale durch die Versorgungsspannung wie beispielsweise mittels einer geschalteten Netzspannung und eine für digitale Befehle bzw. Signale. Es können in diesem Fall auch die beiden massebezogenen Anschlüsse zusammengefasst werden (d.h. die beiden Anschlüsse, die mit N verbunden werden können).

Zwischen dem anderen Anschluss D2 des Leuchtmittelbetriebsgeräts 2 und dem Phasenleiter L der Spannungsversorgung 5 ist ein handelsüblicher Bewegungsmelder 1 geschaltet. Am Anschluss D2 des Steuereingangs D1, D2 können nun im wesentlichen zwei unterschiedliche Signale anliegen, nämlich eines für die Erfassung einer Bewegung durch den Bewegungsmelder 1 sowie ein davon verschiedenes Signal für den Fall, das keine Bewegung am Bewegungsmelder 1 detektiert wird. Im dargestellten Beispiel liegt folgende Definition vor: Erfasst der Bewegungsmelder 1 eine Bewegung, so schließt dieser die Verbindung zwischen dem Phasenleiter L und dem Anschluss D2 kurz, sodass am Anschluss D2 des Steuereingangs D1, D2 der Signalpegel des Phasenleiters L anliegt. Im anderen Fall, wenn der Bewegungsmelder 1 keine Bewegung detektiert, wird die Verbindung zwischen Phasenleiter L und dem Anschluss D2 unterbrochen, sodass am Anschluss D2 keine Spannung anliegt.

Es sind natürlich andere Definitionen bzw. Kodierungen des Bewegungssignals möglich.

Das Leuchtmittelbetriebsgerät 2 kann eine integrierte Steuerschaltung aufweisen, welche mittels einer Treiberschaltung den Betrieb des angeschlossenen Leuchtmittels steuern oder auch regeln kann. Die integrierte Steuerschaltung kann beispielsweise ein Microcontroller oder ein ASIC sein. Die integrierte Steuerschaltung kann auch die Signale des Steuereinganges D1, D2 überwachen und auswerten.

Das Leuchtmittelbetriebsgerät 2 kann einen Speicher aufweisen, in dem unter anderem die Werte für die unterschiedlichen Dimm-stufen und auch die Dimm-parameter abgelegt werden, die durch das erfindungsgemäße Verfahren festgelegt werden. Zusätzlich oder alternativ können die für den Betrieb des Leuchtmittels erforderlichen Betriebsparameter für das Leuchtmittelbetriebsgerät 2 in dem Speicher abgelegt werden, um das angeschlossene Leuchtmittel beispielsweise anhand einer erfolgten Bestimmung des Leuchtmittel-Typs bzw. der Leuchtmittel-Wattage korrekt zu betreiben. Auch der Leuchtmittel-Typs bzw. die Leuchtmittel-Wattage, welche aufgrund einer Erkennungs-Messung bestimmt wurde, kann in dem Speicher abgelegt werden.

Der Speicher kann in der integrierten Steuerschaltung enthalten sein oder als eigene integrierte Schaltung mit der integrierten Steuerschaltung verbunden sein. Der Speicher kann beispielsweise ein Flash-Speicher sein.

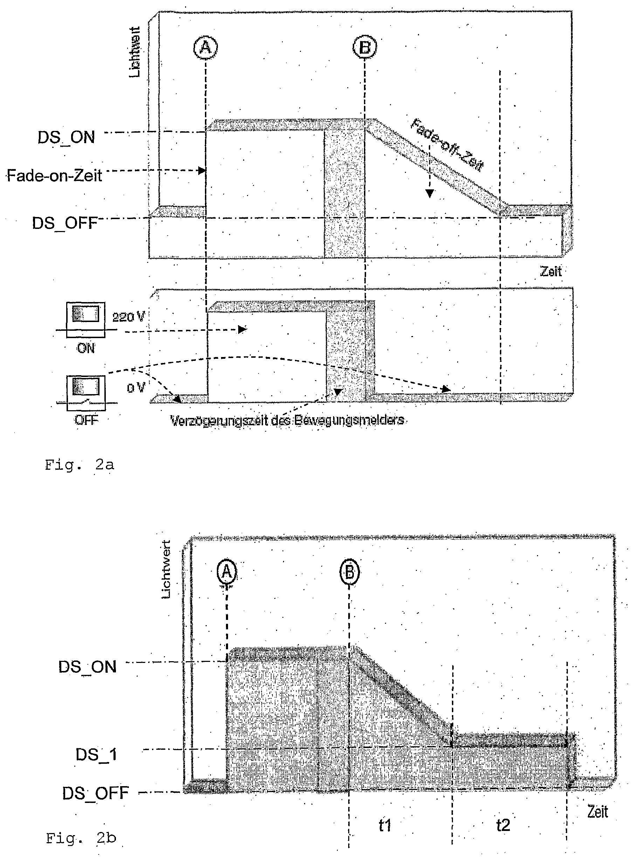

Ein möglicher zeitlicher Verlauf des am Leuchtmittelbetriebsgerät 2 anliegenden Signals ist im unteren Teil der Abbildung 2a dargestellt. Dieses Signal kann beispielsweise durch einen Bewegungsmelder 1 erzeugt werden. Wird eine Bewegung erfasst, so liegt in diesem Beispiel die volle Netzversorgungsspannung an, detektiert der Bewegungsmelder 1 hingegen keine Bewegung, so liegt am Steuereingang D1, D2 des Leuchtmittelbetriebsgeräts 2 keine Spannung an. Optional kann der Bewegungsmelder 1 so ausgeführt sein, dass nach Wegfall einer Bewegung die Spannung am Steuereingang D1, D2 des Leuchtmittelbetriebsgeräts 2 nicht sofort abfällt, sondern noch eine bestimmte Zeitdauer (Verzögerungszeit) die Netzversorgungsspannung am Steuereingang D1, D2 des Leuchtmittelbetriebsgeräts 2 aufrecht erhalten wird. Diese Zeitdauer (Verzögerungszeit) kann gegebenenfalls einstellbar sein und ist in der Abbildung markiert (dunkel dargestellt).

Der obere Teil der Abbildung 2a zeigt die Ansteuerung des Leuchtmittelbetriebsgeräts 2 und dient zur Erläuterung eines Dimm-szenarios. Im Leuchtmittelbetriebsgerät 2 sind mindestens zwei Dimm-stufen abgelegt, der Ruhewert DS_OFF und der Betriebssollwert DS_ON. Der Ruhewert DS_OFF kann eine im Vergleich zum Betriebssollwert DS_ON niedrigere Dimm-stufe sein, beispielsweise 0% Lichtleistung betragen, aber natürlich auch auf einen Wert mit mehr als 0 % Lichtleistung eingestellt sein. Typischerweise ist, wenn keine Spannung am Steuereingang (D1, D2) des Leuchtmittelbetriebsgeräts 2 anliegt, der Ruhewert DS_OFF angesteuert.

Liegt nun am Steuereingang D1, D2 des Leuchtmittelbetriebsgeräts 2 die Netzversorgungsspannung an (d.h. eine Bewegung wird erfasst), so steuert das Leuchtmittelbetriebsgerät 2 einen vom Ruhewert DS_OFF verschiedenen Betriebssollwert DS_ON an, wobei der Betriebssollwert DS_ON in einer vorteilhaften Ausführungsform eine im Vergleich zum Ruhewert DS_OFF vergrößerte Lichtleistung des angeschlossenen Leuchtmittels angibt. Es ist aber auch möglich, dass der Betriebssollwert DS_ON eine niedrigere Lichtleistung als der Ruhewert DS_OFF aufweist.

Ändert sich nun das Signal/die Spannung an dem Steuereingang D1, D2 des Leuchtmittelbetriebsgeräts 2, so erfolgt ein Wechsel zwischen den Dimm-stufen DS_ON (Betriebssollwert) und DS_OFF (Ruhewert) gemäß einem Dimm-szenario. Eine Änderung des Signals liegt zum Zeitpunkt A und zum Zeitpunkt B vor.

Ein Dimm-szenario ist durch mindestens einen Dimmparameter charakterisiert, beispielsweise durch die Zeitdauer, während dem der Wechsel zwischen den Dimmstufen erfolgt. In Abbildung 2a ist diese Zeitdauer für den Wechsel zwischen Ruhewert DS_OFF und dem Betriebssollwert DS_ON als Fade-on-Zeit bezeichnet, die Zeitdauer für den Wechsel zwischen Betriebssollwert DS_ON und Ruhewert DS_OFF ist als Fade-off-Zeit gekennzeichnet. Der Wechsel zwischen Ruhewert DS_OFF und dem Betriebssollwert DS_ON erfolgt beim im Abbildung 2a dargestellten Beispiel sehr rasch (die Fade-on-Zeit ist sehr klein), die Fade-on-Zeit kann natürlich auch länger sein.

Der Wechsel zwischen den Dimm-stufen muß nicht nur in einem einzigen Schritt erfolgen. Es ist möglich, dass das Leuchtmittelbetriebsgerät 2 zwischenzeitlich einen oder mehrere mittlere Dimm-stufen DS_1,..., DS_N ansteuert und auf diesen eine bestimmte Zeitdauer verweilt. Die mittleren Dimm-stufen DS_1,..., DS_N haben Dimm-werte zwischen dem Ruhewert DS_OFF und dem Betriebssollwert DS_ON. Ein Beispiel für ein derartiges Dimm-szenario ist in Abbildung 2b dargestellt, wo zuerst eine mittlere Dimmstufe DS_1 angesteuert wird (während der Zeitdauer t1). Das Leuchtmittelbetriebsgerät 2 verweilt für eine bestimmte Zeit t2 auf Stufe DS_1, bevor dann der Ruhewert DS_OFF erreicht wird.

In Abbildung 2b ist ein Dimm-szenario mit einer mittleren Dimm-stufe DS_1 für den Wechsel von dem Betriebssollwert DS_ON zu dem Ruhewert DS_OFF dargestellt. Es sind natürlich komplexere Dimm-szenarien mit mittleren Dimmstufen DS_N auch für den Wechsel vom Ruhewert DS_OFF zu dem Betriebssollwert DS_ON möglich (d.h. wenn eine Bewegungserfassung vorliegt).

Wie oben angeführt, ist ein Dimm-szenario durch die Werte des mindestens einen Dimm-parameters charakterisiert. Als Dimm-parameter sind sämtliche Parameter zu verstehen, mit denen der Wechsel zwischen dem Ruhewert DS_OFF und dem Betriebssollwert DS_ON beschrieben wird, so beispielsweise die einzelnen Zeitdauern für den zeitliche Wechsel zwischen den Dimm-stufen (eine Zeitdauer wie beispielsweise fade-on-Zeit, fade-off-Zeit, etc.) sowie die Dimm-werte und Anzahl der (zwischenzeitlichen) mittleren Dimm-stufen DS_1, ..., DS_N.

Das Dimm-szenario kann an das Schaltverhalten des Bewegungsmelders 1 angepasst werden. Dazu kann das am Steuereingang (D1, D2) des Leuchtmittelbetriebsgeräts 2 anliegende Signal statistisch ausgewertet werden. In einer bevorzugten Ausführungsform wird erfasst und/oder ausgewertet, wie oft und in welchen Zeitabständen ein Steuersignal anliegt. Wird das Steuersignal von einem Bewegungsmelder 1 geliefert, so bedeutet dies, dass statistisch ausgewertet wird, wie oft und/oder in welchen Zeitabständen Bewegungen detektiert werden. Diese Information kann nun verwendet werden, um die Werte der Dimm-parameter und/oder der Dimm-stufen DS_OFF (Ruhewert) und DS_ON (Betriebssollwert) dynamisch an die jeweilige Situation anzupassen. Es können verschiedene Dimmszenarien im Leuchtmittelbetriebsgerät 2 abgelegt sein und die Auswertung der Bewegungsmeldungen kann zur Wahl eines bestimmten Dimm-szenarios herangezogen werden.

Werden in einem bestimmten Zeitraum viele Bewegungen erfasst (das heißt der betreffende Raum ist stark frequentiert), so kann die Zeitdauer für den Wechsel zwischen dem Betriebssollwert DS_ON zu dem Ruhewert DS_OFF (als die fade-off-Zeit) verlängert werden. Zusätzlich oder alternativ kann auch der Ruhewert DS_OFF und / oder der Betriebssollwert DS_ON verändert (angepasst, vorzugsweise erhöht) werden. Es kann auch ein Wechsel zwischen unterschiedlichen Dimm-szenarien erfolgen, das heißt beispielsweise, dass das Leuchtmittelbetriebsgerät 2 nicht mehr direkt in einem Schritt vom Betriebssollwert DS_ON zum Ruhewert DS_OFF ansteuert, sondern zusätzlich zwischenzeitlich auf einem oder mehreren mittleren Dimmstufen DS_1,...,DS_N verweilt.

Die mittleren Dimm-stufen DS_1,...,DS_N können nahe dem Betriebssollwert DS_ON gewählt werden. Durch diese Maßnahmen kann erreicht werden, dass der betreffende Raum in der Zeitperiode, während er stark frequentiert ist, sehr gut beleuchtet wird. Zusätzlich kann durch die Adaptierung der Dimm-szenarien erreicht werden, dass zeitlich kurz aufeinanderfolgende Aus- und Wiedereinschaltvorgänge des Leuchtmittels vermieden werden. Um solche unnötigen Schaltvorgänge zu reduzieren, kann die Zeitdauer für den Wechsel vom Betriebssollwert DS_ON zum Ruhewert DS_OFF in etwa so gewählt werden, dass sie in der Größenordnung der mittleren Zeitdauer zwischen zwei Bewegungsmeldungen liegt.

Über die Auswertung des Schaltverhaltens des Bewegungsmelders 1 kann auch erkannt werden, ob dieser eine Verzögerungszeit eingestellt hat. Es kann zudem abgeschätzt werden, wie groß diese Verzögerungszeit gegebenenfalls ist.

Ist der betreffende Raum weniger stark frequentiert, so kann das Dimm-szenario derart angepasst werden, dass der Ruhewert DS_OFF schneller erreicht wird, das heißt, dass die Zeitdauer für den Wechsel zwischen dem Betriebssollwert DS_ON und dem Ruhewert DS_OFF verkürzt wird. Es kann natürlich auch das Dimm-szenario adaptiert werden.

In einer weiteren vorteilhaften Ausführungsvariante kann das Dimm-szenario (die Dimm-parameter) an die Tageszeit (Tagesperiode) angepasst werden.

So können verschiedene Dimm-szenarien im Leuchtmittelbetriebsgerät 2 abgelegt sein, und je nach Tageszeit ein anderes Dimm-szenario verwendet/ausgewählt werden.

In einer weiteren Ausführungsform kann eine Ermittlung der Tageszeit anhand der Erfassung der Steuersignale erfolgen. Es kann vorgesehen sein, dass das Leuchtmittelbetriebsgerät 2 anhand der statistischen Auswertung der Bewegungsmeldungen Muster oder Eigenschaften erkennt, die sich in einem täglichen Rhythmus wiederholen und so Rückschlüsse auf die Tageszeit (Tagesperiode) erlauben. Diese Erfassung der Tageszeit kann auch durch eine Messung der Helligkeit bspw. mit Hilfe eines Lichtsensors ergänzt werden.

Die Ansteuerung der Leuchtmittelbetriebsgeräte 2 kann auch über ein Relais einer zentralen Steuerung oder beispielsweise in Abhängigkeit einer anderen Anwesenheitserfassung wie einer Türüberwachung erfolgen.

Die Einstellung der Dimm-stufen Ruhewert DS_OFF und Betriebssollwert DS_ON sowie der Parameter des Dimm-szenarios (mittlere Dimm-stufen DS_1, ..., DS_N, Zeitdauern wie die fade-on-Zeit, fade-off-Zeit, ...) kann beispielsweise über eine Schnittstelle erfolgen. Es kann dabei als Schnittstelle der Steuereingang (D1, D2) oder auch eine weitere vorhandene Schnittstelle verwendet werden. Dies kann im Betrieb, während der Installation, während der Fertigung etc ausgeführt werden. Die Schnittstelle kann auch drahtlos ausgebildet sein.

Zusammengefasst offenbart die Erfindung eine verbesserte Ansteuerung eines Leuchtmittelbetriebsgeräts 2, die sich dadurch auszeichnet, dass es sich flexibel und dynamisch an unterschiedliche Situationen anpassen kann.
Auf diese Weise kann auf aufwändige und störanfällige Lichtsteuersysteme oder Bewegungsmelder verzichtet werden, da das Leuchtmittelbetriebsgerät die für eine flexible Lichtsteuerung erforderliche Intelligenz übernimmt. Somit können einfache, handelsübliche Bewegungsmelder angewendet werden, die nur bei Erkennen einer Bewegung die Netzspannung schalten.

## Patentansprüche

1. Leuchtmittelbetriebsgerät (2), aufweisend einen Steuereingang (D1, D2),
wobei in dem Leuchtmittelbetriebsgerät (2) wenigstens zwei Dimmstufen (DS_OFF. DS_ON) abgelegt sind, wobei eine erste Dimmstufe einem Ruhewert (DS_OFF) und eine zweite Dimmstufe einem Betriebssollwert (DS_ON) eines Leuchtmittels (4) entspricht, und abhängig von einem am Steuereingang (D1, D2) anliegenden Steuersignal von einem Bewegungsmelder (1) eine der Dimmstufen selektiv angesteuert wird,
**gekennzeichnet dadurch,**
**dass** in dem Leuchtmittelbetriebsgerät (2) wenigstens zwei Dimmszenarien abgelegt sind, die jeweils durch den Wert wenigstens eines Dimmparameters charakterisiert sind, der den Übergang zwischen dem Ruhewert (DS_OFF) und dem Betriebssollwert (DS_ON) bzw. dem Betriebssollwert (DS_ON) und dem Ruhewert (DS_OFF) beschreibt,
wobei sich die wenigsten zwei Dimmszenarien durch den jeweiligen Wertdes wenigstens einen Dimmparameters unterscheiden, und
wobei das Leuchtmittelbetriebsgerät (2) dazu eingerichtet ist, das von dem Bewegungsemelder (1) empfangene Steuersignal statistisch auszuwerten und in Abhängigkeit der Auswertung eines der wenigstens zwei Dimmszenarien auszuwählen.

2. Leuchtmittelbetriebsgerät (2) nach Anspruch 1, **gekennzeichnet dadurch, dass** die Häufigkeit der Bewegungsmeldungen und/oder die Dauer zwischen den Bewegungsmeldungen ausgewertet werden und in Abhängigkeit davon die wenigstens zwei Dimmszenarien und/oder die wenigstens zwei Dimmstufen angepasst werden.

3. Leuchtmittelbetriebsgerät (2) nach einem der Ansprüche 1 oder 2, **gekennzeichnet dadurch, dass** dem Leuchtmittelbetriebsgerät (2) auch digitale Befehle als Steuersignale zugeführt werden können.

4. Leuchtmittelbetriebsgerät (2) nach einem der Ansprüche 1 bis 3, **gekennzeichnet dadurch, dass** die wenigstens zwei Dimmstufen (DS_OFF. DS_ON) und der wenigstens eine Dimmparameter über den Steuereingang (D1, D2) einstellbar sind.

5. System zur Ansteuerung von Leuchtmittelbetriebsgeräten (2), aufweisend wenigstens ein Leuchtmittelbetriebsgerät (2) nach einem der Ansprüche 1 bis 4 und wenigstens einen Bewegungsmelder (1), wobei der Bewegungsmelder (1) mit dem Steuereingang (D1, D2) des Leuchtmittelbetriebsgeräts (2) verbunden ist.

6. System nach Anspruch 5, **gekennzeichnet dadurch, dass** das Leuchtmittelbetriebsgerät (2) ausgewertet, wie oft und in welchem Abstand Bewegungsmeldungen erfasst werden und in Abhängigkeit davon die Dimmszenarien und/oder die wenigstens zwei Dimmstufen (DS_OFF. DS_ON) angepasst werden.

## Claims

1. Lamp operating device (2) comprising a control input (D₁, D₂),
wherein there are at least two dimming levels (DS_OFF. DS_ON) stored in the lamp operating device (2), wherein a first dimming level corresponds to an quiescent value (DS_OFF) and a second dimming level corresponds to an desired operational value (DS_ON) of a lamp (4), and wherein one of the dimming levels is selectively activated by a motion detector (1) as a function of a control signal which is applied to the control input (D₁, D₂),
**characterized in that**
there are at least two dimming scenarios stored in the lamp operating device (2), each of which is **characterized by** the value of at least one dimming parameter which represents the transition between the quiescent value (DS_OFF) and the desired operational value (DS_ON), or between the desired operational value (DS_ON) and the quiescent value (DS_OFF),
wherein the least two dimming scenarios differ by the respective value of the at least one dimming parameter, and
wherein the lamp operating device (2) is configured to statistically evaluate the control signal received by the motion sensor (1) and to select one of the at least two dimming scenarios as a function of the evaluation.

2. Lamp operating device (2) according to claim 1,
**characterized in that**
the frequency of the motion messages and/or the duration between the movement messages are/is evaluated and the at least two dimming scenarios and/or the at least two dimming levels are adapted as a function thereof.

3. Lamp operating device (2) according to one of the claims 1 or 2,
**characterized in that**
digital commands may also be supplied to the lamp operating device (2) as control signals.

4. Lamp operating device (2) according to one of the claims 1 to 3,
**characterized in that**
the at least two dimming levels (DS_OFF. DS_ON) and the at least one dimming parameter are adjustable via the control input (D₁, D₂).

5. System for controlling the lamp operating device (2) comprising at least one lamp operating device (2) according to one of the claims 1 to 4, and at least one motion detector (1), wherein the motion detector (1) is connected to the control input (D₁, D₂) of the lamp operating device (2).

6. System according to claim 5,
**characterized in that**
the lamp operating device (2) evaluates how often and at what intervals motion messages are detected, wherein the dimming scenarios and/or the at least two dimming levels (DS_OFF.DS_ON) are adapted as a function thereof.

## Revendications

1. Appareil de service pour moyen d'éclairage (2), présentant une entrée de commande (D1, D2), au moins deux niveaux de gradation lumineuse (DS_OFF.DS_ON) étant enregistrés dans l'appareil de service pour moyen d'éclairage (2), un premier niveau de gradation lumineuse correspondant à une valeur de repos (DS_OFF), et un deuxième niveau de gradation lumineuse correspondant à une valeur de consigne de service (DS_ON) d'un moyen lumineux (4), et un des niveaux de gradation lumineuse étant commandé sélectivement en fonction d'un signal de commande, provenant d'un détecteur de mouvement (1), présent sur l'entrée de commande (D1, D2),
**caractérisé en ce que**,
dans l'appareil de service pour moyen d'éclairage (2), au moins deux scénarios de gradation lumineuse sont enregistrés, qui sont respectivement **caractérisés par** la valeur d'au moins un paramètre de gradation lumineuse qui décrit la transition entre la valeur de repos (DS_OFF) et la valeur de consigne de service (DS_ON) ou respectivement entre la valeur de consigne de service (DS_ON) et la valeur de repos (DS_OFF),
les au moins deux scénarios de gradation lumineuse se distinguant par la valeur respective du paramètre de gradation lumineuse au moins au nombre de un, et
l'appareil de service pour moyen d'éclairage (2) étant aménagé pour analyser statistiquement le signal de commande reçu en provenance du détecteur de mouvement (1) et pour sélectionner un des au moins deux scénarios de gradation lumineuse en fonction de l'analyse.

2. Appareil de service pour moyen d'éclairage (2) selon la revendication 1, **caractérisé en ce que** la fréquence des détections de mouvement et/ou la durée entre les détections de mouvement sont analysées et les au moins deux scénarios de gradation lumineuse et/ou les aux moins deux niveaux de gradation lumineuse sont adaptés en fonction de cela.

3. Appareil de service pour moyen d'éclairage (2) selon l'une des revendications 1 ou 2, **caractérisé en ce que** des instructions numériques également peuvent être acheminées en tant que signaux de commande à l'appareil de service pour moyen d'éclairage (2).

4. Appareil de service pour moyen d'éclairage (2) selon l'une des revendications 1 à 3, **caractérisé en ce que** les au moins deux niveaux de gradation lumineuse (DS_OFF.DS_ON) et le paramètre de gradation lumineuse au moins au nombre de un peuvent être réglés par le biais de l'entrée de commande (D1, D2).

5. Système destiné à commander des appareils de service pour moyen d"éclairage (2), présentant au moins un appareil de service pour moyen d'éclairage (2) selon l'une des revendications 1 à 4 et au moins un détecteur de mouvement (1), le détecteur de mouvement (1) étant raccordé à l'entrée de commande (D1, D2) de l'appareil de service pour moyen d'éclairage (2).

6. Système selon la revendication 5, **caractérisé en ce que** l'appareil de service pour moyen d'éclairage (2) analyse combien de fois et à quels intervalles des détections de mouvement sont détectés et, en fonction de cela, les scénarios de gradation lumineuse et/ou les au moins deux niveaux de gradation lumineuse (DS_OFF.DS_ON) sont adaptés.
